# EUROPEAN PATENT APPLICATION

(11) **EP 1 770 483 A1**
(43) Date of publication of application: **04.04.2007**
(21) Application number: 05765308.1
(22) Date of filing: 01.07.2005
(51) Int. Cl.: G06F 3/023, H03M 11/04, H03M 11/08, H03M 11/22, H04M 1/00, H04M 1/02, H04M 1/23

(54) **ELECTRONIC DEVICE**

(30) Priority: 05.07.2004 JP 2004197618
(71) Applicant: Vodafone K.K., Tokyo 105-7317 (JP)
(72) Inventor: KUSUDA, Hirohisa, Vodafone K.K., Minato-ku, Tokyo 105-7317 (JP); NISHIDE, Yasuhiro, Vodafone K.K., Minato-ku, Tokyo 105-7317 (JP); TSUJINO, Daisuke, Vodafone K.K., Minato-ku, Tokyo 105-7317 (JP); YAMAZAKI, Jun, Vodafone K.K., Minato-ku, Tokyo 105-7317 (JP); KATAYAMA, Takashi, Sha Maison Ashiya 203, Ashiya-shi, Hyogo 6590084 (JP)
(74) Representative: Grünecker, Kinkeldey, Stockmair & Schwanhäusser Anwaltssozietät
(86) International application number: PCT/JP2005/012248
(87) International publication number: WO 2006/004063

(57) **Abstract**

An electronic apparatus 20 of the present invention includes operating means 220, control means 221, attitude detecting means 222, and assignment changing means 223. The operating means 220 has a plurality of keys capable of being operated independently from each other. The control means 221 performs predetermined operations different from each other assigned to the plurality of keys when the keys are operated. The attitude detecting means 222 performs attitude detection of the operating means 220. The assignment changing means 223 performs assignment changing processing for changing the assignment of the predetermined operations to be performed by the control means 221 to at least a part of the plurality of keys based on the detection results performed by the attitude detecting means 222.

## Description

### Technical Field

The present invention relates to an electronic apparatus such as a mobile communication terminal, a personal digital assistance (PDA), a touch panel, or a game machine.

### Background Art

In a large number of electronic apparatuses such as mobile communication terminals such as mobile phones and touch panels, a plurality of operations are assigned to one key of operating means thereof. For example, Patent Document 1 discloses a mobile phone in which, when a character is inputted, the character type relating to character input operations assigned to each key can be changed by pressing a shift key. In addition, for example, it is widely known that, for example, during composing a mail by using a mobile phone, an operation is performed to change the mode from Japanese input mode to the English alphabet input mode, the character type relating to character input operations assigned to the respective keys can be changed from Japanese to the English alphabet. Thus, processing for changing key operation assignment based on the user's key operations upon assigning a plurality of operations to one key has been used in electronic apparatuses.
Patent Document 1: Japanese Unexamined Patent Application Publication No. 2003-58306 (paragraph 0026).

### Disclosure of the Invention

### Problems to be Solved by the Invention

However, in a conventional electronic apparatus, a user must perform some key operations to change the key operation assignment. In the case of the mobile phone of Patent Document 1, in order to change the character type relating to character input operations assigned to the respective keys to another character type, a user must perform a key operation of pressing a shift key. In the above-described example in which the character type relating to character input operations assigned to the respective keys are changed from Japanese to the English alphabet, the user must perform key operations for changing the Japanese input mode to the English alphabet input mode.

An object of the present invention is to provide an electronic apparatus which does not require users to perform key operations to change the key operation assignment.

### Means for Solving the Problem

An electronic apparatus according to the present invention includes: operating means having a plurality of keys capable of being operated independently from each other; control means for executing predetermined operations different from each other assigned to the respective keys when the keys are operated; attitude detecting means for detecting the attitude of the operating means; and assignment changing means for performing assignment changing processing for changing assignment of predetermined operations to be executed by the control means for at least a part of the keys based on the detection results of the attitude detecting means.
In this electronic apparatus, when the operating means is tilted or rotated and changed in attitude, this attitude change is detected by the attitude detecting means. The assignment changing means performs assignment changing processing for changing operation assignment of at least a part of the keys of the operating means. Therefore, a user can change the predetermined operations assigned to at least a part of the keys only by changing the attitude of the operating means without performing special key operations.
The term "change" here means not only changing of predetermined operations assigned to at least a part of the keys to other operations, but also changing of the predetermined operations assigned to at least a part of the keys from a valid state to an invalid state or from an invalid state to a valid state.

In the above-described electronic apparatus, it is preferable that the attitude detecting means detects a change amount in attitude with respect to a reference attitude of the operating means, and when the change amount in attitude detected by the attitude detecting means exceeds a preset threshold value, the assignment changing means executes the assignment changing processing.
In this electronic apparatus, when the attitude of the operating means changes according to an operation of the operating means by a user, a change amount in attitude with respect to a reference attitude of the operating means is detected by the attitude detecting means. When the change amount in attitude detected by the attitude detecting means exceeds a preset threshold value, the assignment changing processing is executed. Therefore, only by an easy operation of changing the attitude of the operating means by a predetermined amount by a user, predetermined operations assigned to at least a part of the keys can be changed. In addition, when the attitude of the operating means does not exceed the threshold value, the assignment changing processing is not executed, so that execution of the assignment changing processing by mistake due to a small change in attitude of the operating means can be avoided.

Preferably, the electronic apparatus includes reference data memory means for storing reference data, wherein the operating means is formed by arranging a plurality of keys on a plane, the attitude detecting means detects the orientation of a predetermined direction predetermined on this plane, the control means stores data on the orientation of the predetermined direction obtained from the attitude detection results made at a predetermined timing by the attitude detecting means as the reference data in the reference data memory means, and calculates an angle between an orientation of a projection direction of the orientation of the predetermined direction obtained from the attitude detection results performed by the attitude detecting means after the reference data storing with respect to a virtual plane on which the plane was positioned at the predetermined timing and the orientation of the predetermined direction identified from the reference data, and the assignment changing means performs the assignment changing processing when the angle calculated by the control means deviates from a predetermined angle range.
In this electronic apparatus, from the detection results performed by the attitude detecting means, the orientation of the predetermined direction predetermined on the plane on which the keys are arranged (hereinafter, referred to as "operation surface") can be identified. Then, data on the orientation of the predetermined direction obtained from the attitude detection results performed by the attitude detecting means at the predetermined timing is stored as reference data in the reference data memory means. This reference data indicates an attitude (basic attitude) of the operation surface when a user operates a key on the operation surface in a state that the normal line direction of the operation surface is substantially fixed. The predetermined timing is properly set so that the reference data becomes the data showing the basic attitude. A detailed example of this predetermined timing will be described later.
In this electronic apparatus, after storing the reference data, attitude detection is performed by the attitude detecting means at an arbitrary timing, and an orientation of the projection direction with respect to the virtual plane in the orientation of the predetermined direction obtained from the detection results is calculated. Thereafter, an angle between the orientation of the projection direction and the orientation of the predetermined direction identified from the reference data is calculated. The virtual plane corresponds to a plane on which the operation surface is positioned in the basic attitude. Therefore, the angle to be calculated herein indicates the degree of rotation of the attitude of the operation surface when it is detected after the reference data is stored with respect to the basic attitude within the virtual plane. Accordingly, a user rotates the operation surface around the normal line of the operation surface in the basic attitude in which the normal line detection of the operation surface is substantially fixed, and when the rotation angle deviates from a predetermined angle range, the user can change the predetermined operations assigned to at least a part of the keys.

In the electronic apparatus, it is preferable that the assignment changing processing is for assigning predetermined operations that were assigned to the respective keys as operation assignment changing targets before changing to other keys.
In this electronic apparatus, when the assignment changing processing is performed, operations that were assigned to the keys as operation assignment changing targets are assigned to other keys. Therefore, even after the key operation assignment is changed, the operations which the user can execute by key operations are the same before and after the change. Accordingly, even if the key operation assignment is changed, the user can execute the operations before being changed.

The above-described "electronic apparatus" includes not only a mobile communication terminal but also a Personal Digital Assistance (PDA), a game machine, etc. The "mobile communication terminal" includes a GSM (Global System for Mobile Communications) type or a TIA (Telecommunications Industry Association) type mobile phone, a mobile phone standardized by IMT (International Mobile Telecommunications)-2000, a TD-SCDMA (MC: Multi Carrier) type mobile phone that is one of the TD-SCDMA (Time Division Synchronous Code Division Multiple Access) type, a PHS (Personal Handyphone System), a car phone, etc. The "mobile communication terminal" also includes a mobile communication terminal added with a mobile phone module. The "electronic apparatus" also includes an electronic apparatus which does not have communication functions.
Control in the electronic apparatus can also be realized by executing a predetermined program in a computer provided therein. The program to be used in this computer may be provided by using a recording medium such as an FD or CD-ROM storing the program as digital information, or may be provided by using a communication network such as a computer network.

### Effect of the Invention

According to the present invention, a user can change predetermined operations assigned to at least a part of a plurality of keys of an operating means only by changing an attitude of the control means without performing special key operations. Therefore, when the key operation assignment is changed, key operations by a user are not required.

### Brief Description of Drawings

Fig. 1 is an illustration explaining the overall configuration of a mobile communication system that can be utilized by a mobile phone according to the present embodiment.
Fig. 2 is a schematic configuration diagram showing hardware configuration of a download server constituting the mobile communication system.
Fig. 3 is a front view showing an external appearance of the mobile phone.
Fig. 4 is a schematic configuration diagram showing hardware configuration of the mobile phone.
Fig. 5 is a functional block diagram of the mobile phone.
Fig. 6 is a block diagram showing a main configuration of the mobile phone.
Fig. 7 is an explanatory view of a software structure in the mobile phone.
Fig. 8 is a flowchart showing a flow of processing for executing an application program in the mobile phone.
Fig. 9 is a sequence flow diagram when the application program is executed in the mobile phone.
Fig. 10 is a flowchart showing a flow of the game screen direction switching processing and key-assigned operation changing processing.
Fig. 11A is an explanatory view before an attitude of an operation surface is changed by rotating the mobile phone around a normal line (Z-axis) of the operation surface.
Fig. 11B is an explanatory view after the attitude of the operation surface is changed by rotating the mobile phone around the normal line (Z-axis) of the operation surface.

### Description of Reference Numerals

- 10: MOBILE PHONE COMMUNICATION NETWORK
- 11: DOWNLOAD SERVER
- 20: MOBILE PHONE
- 21: NUMERIC KEYPAD
- 27: LIQUID CRYSTAL DISPLAY
- 207: ACCELERATION SENSOR
- 208: GEOMAGNETIC SENSOR
- 213: OPERATION UNIT
- 214: APPLICATION PROGRAM EXECUTION MANAGEMENT UNIT
- 215: MAIN CONTROL UNIT
- 217: SENSOR DETECTION UNIT
- 220: OPERATING MEANS
- 221: CONTROL MEANS
- 222: ATTITUDE DETECTING MEANS
- 223: ASSIGNMENT CHANGING MEANS

### Best Mode for Carrying Out the Invention

Hereinafter, embodiments of the present invention will be described with reference to the drawings.

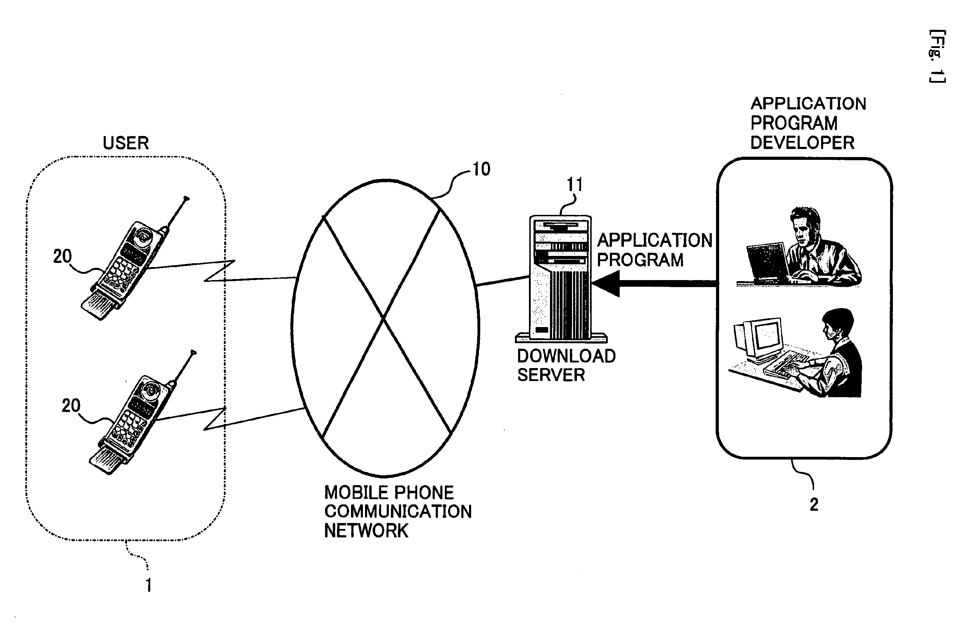

Fig. 1 shows an illustration explaining the overall configuration of a mobile communication system that can be utilized by a mobile phone according to the present embodiment.
In this mobile communication system, the mobile phone 20 that a user 1 uses has a configuration capable of executing an application program registered by the user 1. In the present embodiment, this application is developed according to object-oriented programming which does not depend on a platform. As such an application program, there are available application programs written in JAVA (registered trademark, the same applies to the description below), and application programs which work in an application execution environment of BREW (registered trademark, the same applies to the description below). This mobile phone 20 is connectable to a mobile phone network 10 as a communication network. To this mobile phone network 10, an application program download server (hereinafter, referred to as "download server") 11 as a program providing server is connected. When this download server 11 accepts a download request from the mobile phone 20, the download server 11 transmits an application program relating to this request to the mobile phone 20.

The application program provided from the download server 11 is provided from a developer 2 of the application program. More specifically, for example, from a personal computer, etc., on the application program developer 2 side, the application program is uploaded to the download server 11 via an exclusive line or public line and provided. It is also possible that a recording medium such as an optical disk or magnetic disk on which the developed application program has been recorded is delivered from the application program developer 2 to a communication carrier who manages and operates the download server 11 and the application program in the recording medium is read by the download server 11 and provided. The thus provided application program is registered on the download server 11 in a state that it can be downloaded into the mobile phone 20 via the mobile phone network 10.

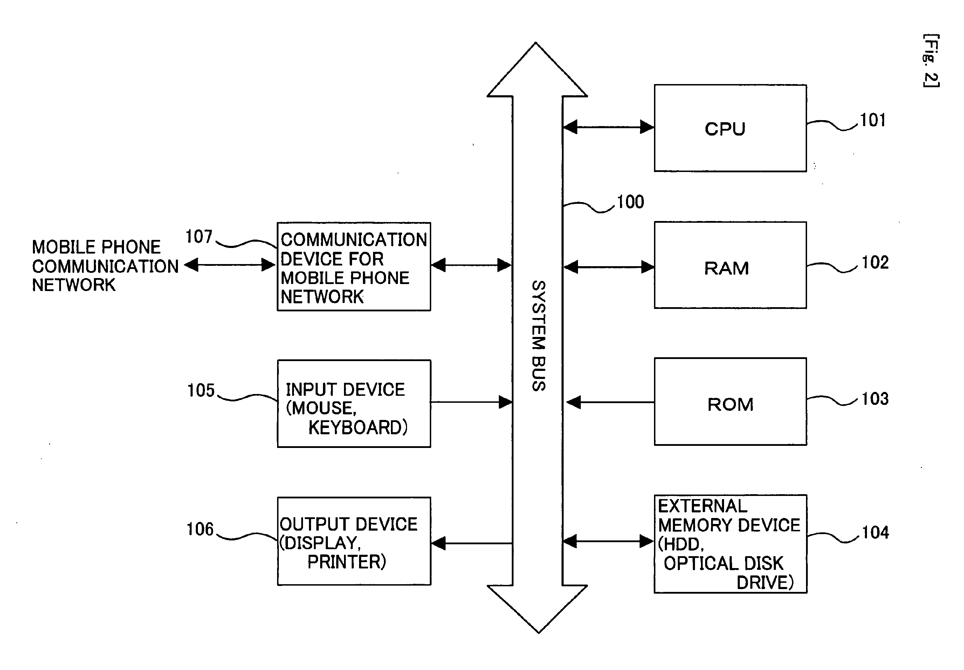

Fig. 2 is a schematic configuration diagram showing hardware configuration of the download server 11.
This download server 11 includes a system bus 100, a CPU 101, an internal memory device, an external memory device 104, an input device 105, and an output device 106. The internal memory device is comprised of a RAM 102 and a ROM 103, etc. The external memory device is comprised of a hard disk drive (HDD) or an optical disk drive, etc. The input device 105 is comprised of the external memory device 104, a mouse, and a keyboard, etc. The output device 106 includes a display and a printer, etc. Furthermore, this download server 11 includes a mobile phone communication device 107 for communicating with the mobile phones 20 of each user 1 via the mobile phone network 10.
Components such as the CPU 101 and the RAM 102 exchange data and program commands, etc., with each other via the system bus 100. A program for operating this download server 11 according to predetermined procedures is stored in the ROM 103 or the external memory device 104, and it is called out to a work area on the CPU 101 and the RAM 102 and executed as appropriate. In this download server 11, the application program to be provided to the mobile phone 20 is stored in the external memory device 104. The download server 11 has a function for transmitting the application program stored in the external memory device 104 to the mobile phone 20 via the mobile phone communication network 10 by cooperation of the CPU 101, RAM 102, and communication device 107, etc., for a mobile phone communication network in response to a download request from the mobile phone 20. This download server 11 may be constructed as an exclusive control unit, or may be constructed by using a general-purpose computer system. It may be constructed by one computer, or may be constructed by connecting a plurality of computers having a plurality of functions, respectively, to each other by a network.

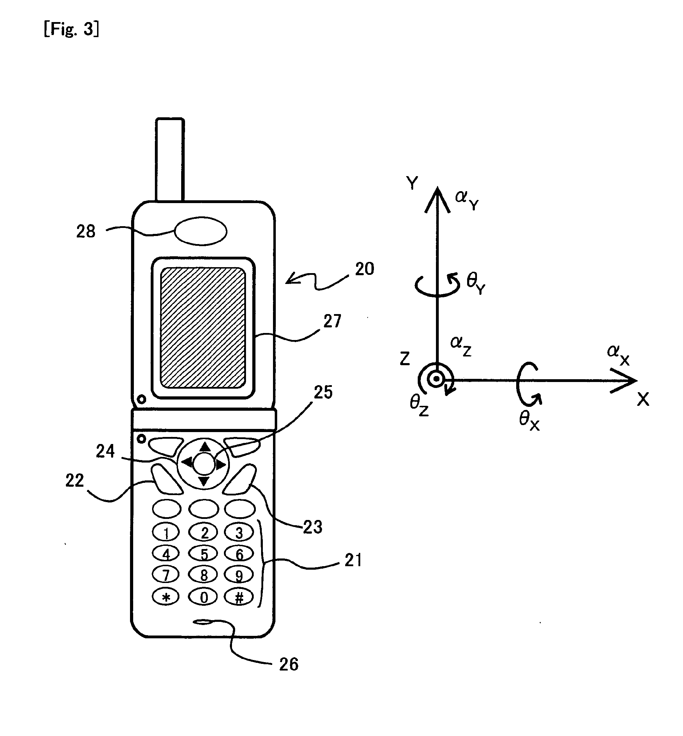

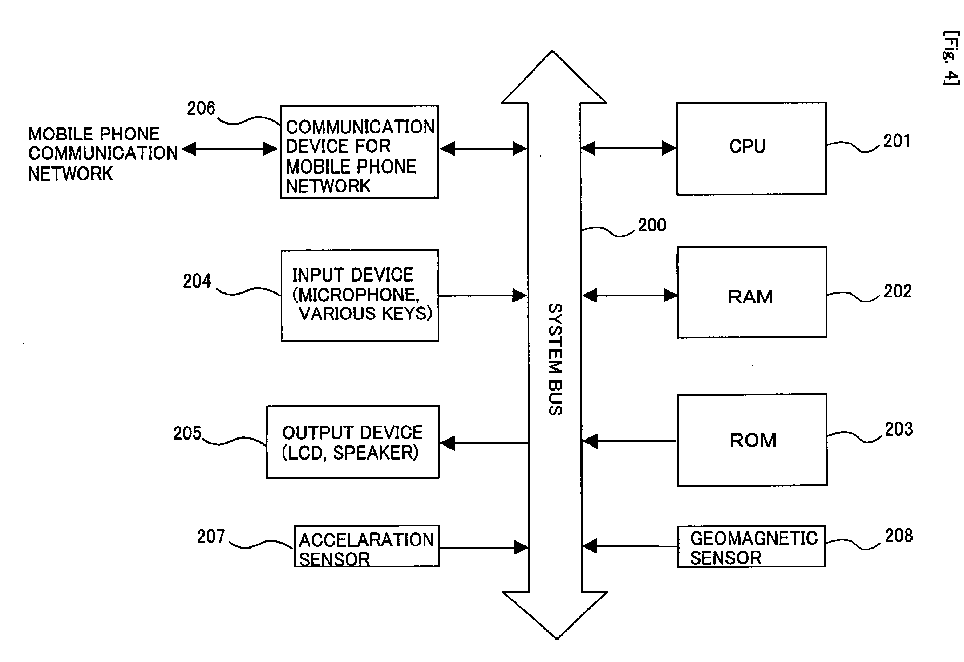

Fig. 3 is a front view showing the external appearance of the mobile phone 20, and Fig. 4 is a schematic configuration diagram showing hardware configuration of the mobile phone 20.
This mobile phone 20 is a clam shell (folding) type mobile phone, and includes an internal control device including a system bus 200, a CPU 201, a RAM 202, and a ROM 203, etc., an input device 204, an output device 205, a mobile phone communication device 206, an acceleration sensor 207, and a geomagnetic sensor 208, etc. Components such as the CPU 201 and the RAM 202 exchange various data and program commands described later, etc., with each other via the system bus 200. The input device 204 is comprised of data input keys (numeric keypad, * key, # key) 21, a call start key 22, a call termination key 23, a scroll key 24, a multifunction key 25, and a microphone 26, etc. The output device 205 is comprised of a liquid crystal display (LCD) 27 as display means, and a speaker 28, etc. The mobile phone communication device 206 is for communications with other mobile phones or the download server 11 via the mobile phone network 10. In addition, the RAM 202 has a platform memory area as a first memory means to be managed by a phone platform described later and an application memory area as a second memory means to be managed in an application execution environment described later.

The acceleration sensor 207 is a triaxial acceleration sensor for detecting accelerations αₓ and α_{y} in the two directions (the X-axis direction and Y-axis direction in Fig. 3) orthogonal to each other within a plane parallel to the operation surface on which the data input keys are provided and an acceleration α_{Z} in the normal line direction (the Z-axis direction in Fig. 3) of the plane. This acceleration sensor 207 is mounted on a circuit board that is not shown, provided inside the mobile phone 20, and a known sensor capable of detecting the accelerations α_{X}, α_{Y}, and α_{Z} can be used.
Furthermore, the geomagnetic sensor 208 is a triaxial sensor for detecting magnetic field intensity components (magnetic flux density components) of geomagnetism on a three-dimensional coordinate system consisting of the X-axis, the Y-axis, and the Z-axis. In the present embodiment, by using the detection results performed by this geomagnetic sensor 208, the angles θ_{X}, θ_{Y}, and θ_{Z} around the X-axis, the Y-axis, and the Z-axis are detected. More specifically, a change amount of the geomagnetic direction with respect to a reference geomagnetic direction (reference direction) is detected by using the angles θₓ, θ_{y}, and θ_{z} around the X-axis, Y-axis, and Z-axis. Thereby, when the mobile phone changes in attitude from an attitude in which the geomagnetic direction is in the reference direction, the changed attitude can be identified from the respective angles θ_{X}, θ_{Y}, and θ_{Z}. In the description given below, the angle θ_{X} around the X-axis is referred to as a pitch angle, the angle θ_{Y} around the Y-axis is referred to as a roll angle, and the angle θ_{Z} around the Z-axis is referred to as a yaw angle. The yaw angle θ_{Z} referred to herein indicates an angle between a horizontal projection Y-axis on a horizontal plane of the Y-axis and the north direction. Therefore, from this yaw angle θ_{Z}, the direction of the horizontal projection Y-axis of the mobile phone 20 can be recognized. This geomagnetic sensor 208 is also mounted on the circuit board that is not shown, provided inside the mobile phone 20.

The acceleration sensor 207 and the geomagnetic sensor 208 may be constructed as devices separate from the main body of the mobile phone 20. In this case, concerning the acceleration sensor 207 and the geomagnetic sensor 208, an external unit including these sensors 207 and 208 is integrally connected to the main body of the mobile phone 20, more specifically, to the liquid crystal display 27 of the mobile phone 20.

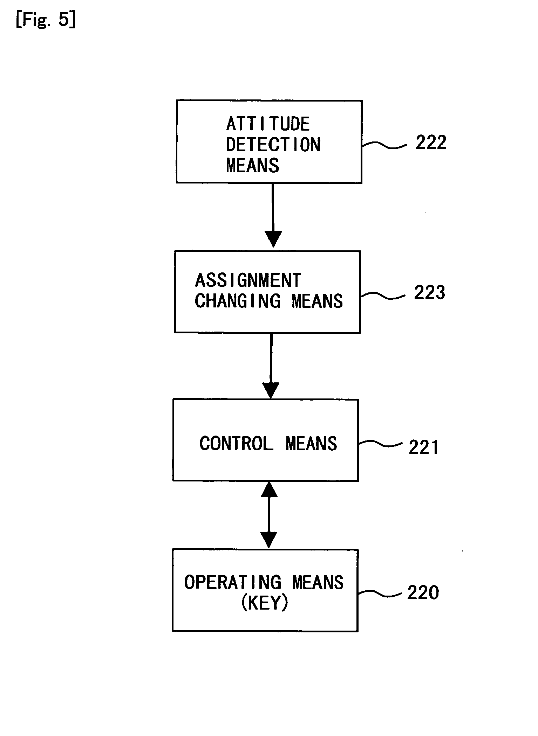

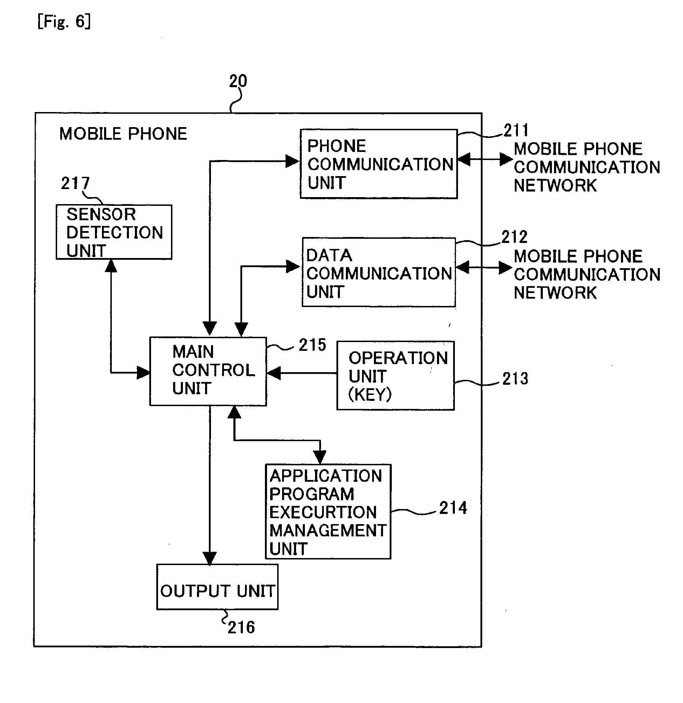

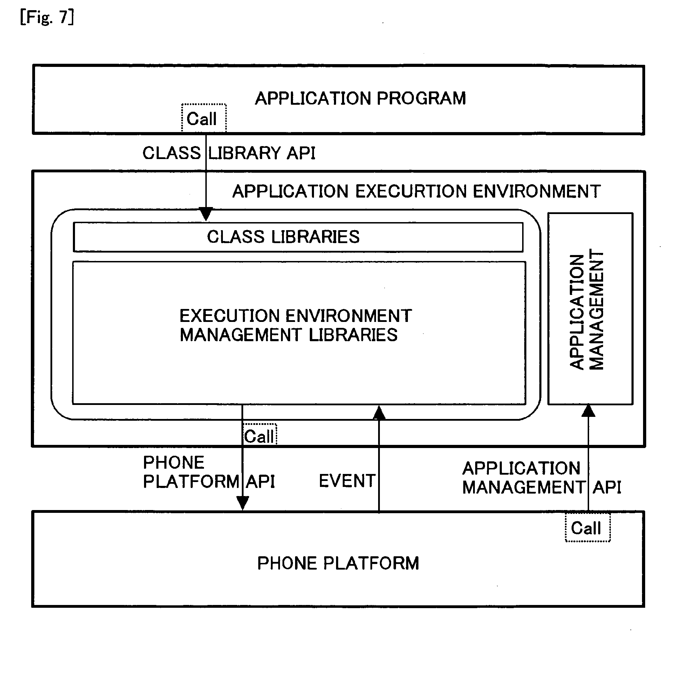

Fig. 5 is a functional block diagram of the mobile phone 20 according to the present invention. Fig. 6 is a block diagram showing the main configuration of the mobile phone 20, and Fig. 7 is an explanatory view of a software structure in the mobile phone 20.
This mobile phone 20 includes a phone communication unit 211 and a data communication unit 212 as radio communication means, an operation unit 213 as the operating means 220, an application program execution management unit 214 as the application program executing means, a main control unit 215, an output unit 216, a sensor detection unit 217 as the attitude detecting means 222, etc.

The phone communication unit 211 is for radio communications with base stations of the mobile phone network 10 to make phone communications with other mobile phones or fixed line phones, and corresponds to a mobile phone communication device 206, etc., on the hardware configuration described above.
The data communication unit 212 corresponds to the mobile phone communication device 206, etc., on the above-described hardware configuration similarly to the phone communication unit 211. This data communication unit 212 is for exchanging mail with other mobile phones via the mobile phone network 10 or for exchanging electronic mail or browsing web pages on the Internet by being connected to an external communication network such as the Internet via a gateway server from the mobile phone network 10. This data communication unit 212 is also used for downloading an application program provided by the download server 11 via the mobile phone network 10.

The operation unit 213 is comprised of the above-described numeric keypad 21, call start key 22, and call termination key 23, etc., to be operated by the user 1. By operating various keys of the operation unit 213, a user can input data such as a URL into the mobile phone 20, start or terminate calling when an incoming call is received, and select, start, and stop an application program. In addition, by operating various keys of the operation unit 213, a user can download application programs from the download server 11.

The application program execution management unit 214 is comprised of the above-described system bus 200, the CPU 201, and a part of the RAM 202, etc. This application program execution management unit 214 corresponds to an "application execution environment" at the center of the software structure of Fig. 7, provides software such as a class library, an execution environment managing library, and application management to be used for application programs developed according to object-oriented programming, and manages an application program execution environment. This application execution environment is properly selected according to an application program to be executed. For example, when the application program to be executed is written in JAVA, the JAVA application execution environment is selected. When the application program to be executed is a program written in C language which works in a BREW execution environment, the BREW application execution environment is selected. When the application program to be executed is written in JAVA, the JAVA application execution environment is further built on the BREW application execution environment, whereby the application program can be executed.

Herein, the application program can be used by calling a class library of functions, etc., in the application execution environment via a class library API (application interface). The calling history of the class library of functions, etc., is stored in an application memory area in the RAM 202 until the virtual execution environment (virtual machine: VM) of the application program is ended. Also, in the application execution environment, various data to be used for the application execution program is also stored in the application memory area. When the various data are used, they are read out from and written on this application memory area. The execution environment management library in the application execution environment can be used by calling a phone platform library in a phone platform described later via a phone platform API.

In the present embodiment, detection data (accelerations α_{X}, α_{Y}, and α_{Z}, pitch angle θ_{X}, roll angle θ_{Y}, and yaw angle θ_{Z}) detected by the sensor detection unit 217 described later composing the acceleration sensor 207 and the geomagnetic sensor 208, etc., are used in the application program. In a conventional application execution environment, the means for using the detection data in the application program was not provided, so that in the present embodiment, a new class (orientation class) is added to the class library. In this orientation class, methods as command sets including getXGravity(), getYGravity(), and getZGravity() for acquiring data of the accelerations α_{X}, α_{Y}, and α_{X} and getPitch(), getRoll(), and getCompassBearing() for acquiring data of the pitch angle θ_{X}, roll angle θ_{Y}, and yaw angle θ_{Z}, etc., are prepared. Therefore, according to the present embodiment, the application program can acquire the detection data by using these methods and use the data.

The main control unit 215 controls the phone communication unit 211, the data communication unit 212, the output unit 216, and the sensor detection unit 217, and is comprised of the above-described system bus 200, the CPU 201, and the RAM 202, etc. This main control unit 215 exchanges control commands and various data with the application program execution management unit 214, and performs controlling in cooperation with it. The main control unit 215 corresponds to the "phone platform" on the lowest side of the software structure of Fig. 7, and executes a control program for controlling the phone communication unit 211, etc., and a user interface, and provides a phone platform library. This phone platform enables execution of various execution environment processings in the application execution environment and calling and use of software of application management in the application execution environment via the application management API. When the application execution environment calls the phone platform library via the phone platform API and uses it, the phone platform executes processing corresponding to the phone platform library. For example, the phone platform reads data stored in a platform memory area managed by the phone platform in the RAM 202 based on an instruction from the application execution environment using the phone platform library and transfers these data into the application memory area.

The output unit 216 is comprised of the output device 205, etc., including the above-described liquid crystal display 27 and the speaker 28, etc. This output unit 216 displays a web page screen received by the data communication unit 212 on the liquid crystal display 27. The liquid crystal display 27 of this output unit 216 is used for informing a user that the phone communication unit 211 and the data communication unit 212 have received information. More specifically, when the information is received, by the main control unit 215, a receipt informing image is displayed on the liquid crystal display 27 of the output unit 216 or a ring tone is outputted from the speaker 28. Furthermore, during the application execution program which is executed in the application execution environment, this output unit 216 is also used for displaying a menu screen, etc., or outputting music relating to the execution of the program.

The sensor detection unit 217 is comprised of the acceleration sensor 207 and the geomagnetic sensor 208, etc. This sensor detection unit 217 works under the control of the main control unit 215, and the main control unit 215 acquires the detection data detected by the sensor detection unit. The data of the accelerations α_{X}, α_{Y}, and α_{Z} and the data of the pitch angle θ_{X}, roll angle θ_{Y}, and yaw angle θ_{Z} as the detection data are stored in the platform memory area of the RAM 202 as described above. For example, gravity acceleration components in the X-axis direction, the Y-axis direction, and the Z-axis direction which change according to the direction of gravitational force acting on the mobile phone 20, that is, the direction of gravitational force acting on the display surface of the liquid crystal display 27 are detected by the acceleration sensor 207 constituting the sensor detection unit 217. When the detection data are inputted into the main control unit 215, the main control unit 215 can recognize the accelerations in the X-axis direction, the Y-axis direction, and the Z-axis direction from the detection data. The data of the accelerations α_{X}, α_{Y}, and α_{Z} are temporarily stored in the platform memory area in the RAM 202 by the main control unit 215.
When the attitude of the mobile phone 20, that is, the operation unit 213 changes, magnetic field intensity components (magnetic flux density components) after this attitude change are detected by the geomagnetic sensor 208 constituting the sensor detection unit 217. The sensor detection unit 217 calculates the respective angles θₓ, θ_{y}, and θ_{z} after change in attitude from detection signals detected by the geomagnetic sensor 208. The data of the respective calculated angles θₓ, θ_{y}, and θ_{z} are outputted to the main control unit 215 and temporarily stored in the platform memory area in the RAM 202 by the main control unit 215 in the same manner as in the case of the accelerations α_{X}, α_{Y}, and α_{Z}.
When the orientation of the mobile phone 20 changes, magnetic field intensity components (magnetic flux density components) after this orientation change are detected by the geomagnetic sensor 208 constituting the sensor detection unit 217. The sensor detection unit 217 calculates the yaw angle θ_{z} after the orientation change from detection signals detected by the geomagnetic sensor 208. The data of the calculated yaw angle θ_{z} is also outputted to the main control unit 215 and temporarily stored in the platform memory area in the RAM 202 by the main control unit 215.

As a method for acquiring the data of the accelerations α_{X}, α_{Y}, and α_{Z} and the angles θ_{X}, θ_{Y}, and θ_{Z} to be stored in the platform memory area from the sensor detection unit 217 by the main control unit 215, the following methods are available. For example, there is an acquiring method in which the main control unit 215 sends a request to the sensor detection unit 217, and in response thereto, the sensor detection unit 217 outputs the data and the main control unit 215 receives the data. Also, for example, an acquiring method may be employed in which data continuously outputted from the sensor detection unit 217 regardless of receiving of a request is received by the main control unit 215 as appropriate. It is also possible to employ an acquiring method in which the main control unit 215 sends a request to the sensor detection unit 217 in response to a request outputted by the application program via the application program execution management unit 214, and in response thereto, the sensor detection unit 217 outputs data and the main control unit 215 receives the data.

A control program for creating a phone platform to operate the mobile phone 20 according to predetermined procedures is stored in the RAM 202 and ROM 203. The basic OS (operating system) programs, programs for creating the application execution environment, and application programs are also stored in the RAM 202 and the ROM 203. These programs are called out to a work area in the CPU 201 and RAM 202 and executed as appropriate.

Next, assignment changing processing of key-assigned operations as a feature of the present invention will be described. In the present embodiment, the case where the present invention is applied to processing operations for executing an application program using the pitch angle θ_{X}, the roll angle θ_{Y}, and the yaw angle θ_{Z} indicating the attitude of the mobile phone 20 (operation unit 213) will be described by way of example. In the present embodiment, this application program is a flight simulator as a game.

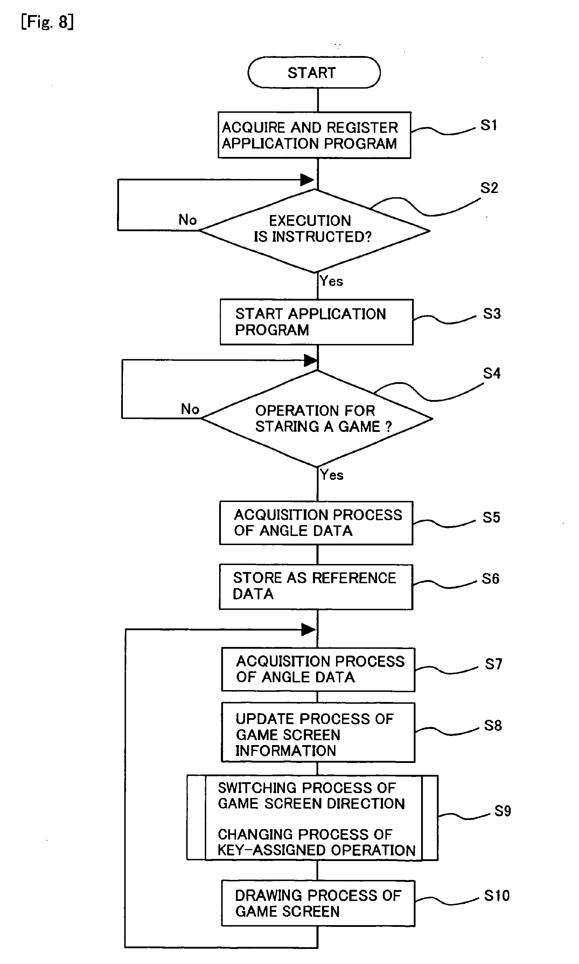

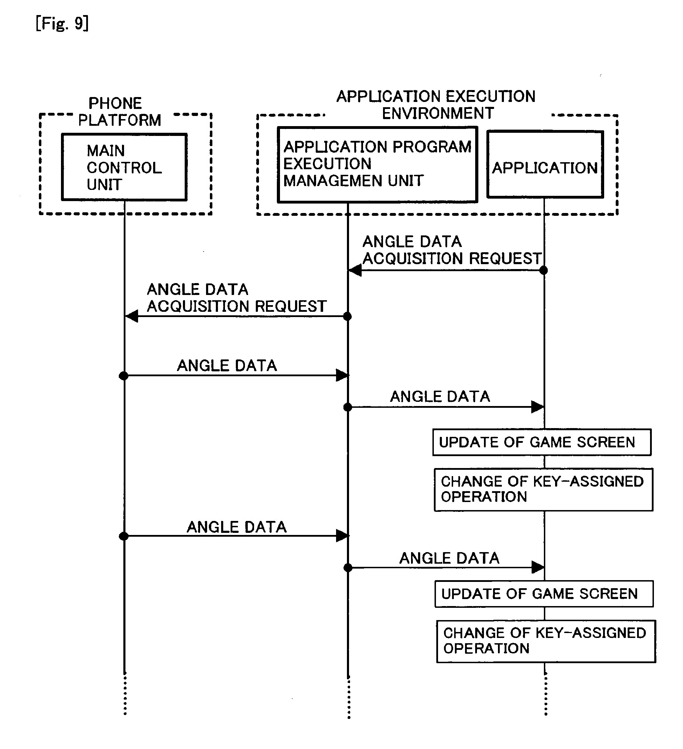

Fig. 8 is a flowchart showing a flow of processing for executing an application program for the flight simulator. Fig. 9 is a sequence flow diagram when the application program for the flight simulator is executed.
First, the user 1 acquires the application program for the flight simulator by downloading from the download server 11, and registers the application program (S1). More specifically, the user 1 accesses the download server 11 by operating the keys of the operation unit 213. Thereby, a download selection screen for selecting a downloadable application program is displayed on the liquid crystal display 27. In this download selection screen, the application program to be executed is selected by using the scroll key 24, and by depressing the multifunction key 25, the main control unit 215 controls the data communication unit 212 and downloads the application program from the download server 11. The thus downloaded application program is stored in the RAM 102 by the main control unit 215.

In order to execute the downloaded application program, the user 1 makes the liquid crystal display 27 display an application selection screen for selecting the application program to be executed by operating the keys of the operation unit 213. Then, in this application selection screen, the user selects the application program for the flight simulator to be executed by using the scroll key 24 and depresses the multifunction key 25.
Then, in the phone platform shown in Fig. 7, that is, in the main control unit 215 shown in Fig. 6, an application program execution instruction is inputted (S2). Thereby, the main control unit 215 reads out the application program for the flight simulator and starts the application program (S3). When the application program starts, in the application execution environment shown in Fig. 7, that is, on the application program execution management unit 214 shown in Fig. 6, the application program works.

When this program starts and the user 1 performs a predetermined operation on the keys of the operation unit 213 to start the game (S4), the game is started, and the liquid crystal display 27 of the output unit 216 displays a game screen imitating the field of view from a pilot's seat of an airplane. Then, the application program starts angle data acquisition processing for acquiring data of the pitch angle θ_{X}, roll angle θ_{Y}, and yaw angle θ_{Z} to be detected by the sensor detection unit 217 substantially in real time. The program updates the contents of the game screen displayed on the liquid crystal display 27 according to the acquired data. For example, when the user 1 tilts the antenna side of the mobile phone 20 downward in the vertical direction, in response to this, the pitch angle θ_{X} changes. Then, when a change amount in pitch angle θ_{X} exceeds a preset threshold value, the game screen is updated so that the nose of the airplane in the game is turned downward in the vertical direction. For example, when the user 1 tilts the display surface of the liquid crystal display 27 of the mobile phone 20 to the left, in response to this, the roll angle θ_{Y} changes. When a change amount in roll angle θ_{Y} exceeds a preset threshold value, the game screen is updated so that the airplane in the game tilts to the left. In the present embodiment, when the airplane in the game is controlled, data of the yaw angle θ_{z} is not used.

More specifically, as shown in Fig. 9, in the application execution environment, the application program that has been started sends an angle data acquiring request to the application program execution management unit 214. The application program execution management unit 214 receives the request and sends an angle data acquiring request as a data transfer command to the main control unit 215 of the phone platform. The main control unit 215 receives this request and sends the data of the pitch angle θ_{X}, the roll angle θ_{Y}, and the yaw angle θ_{Z} stored in the platform memory area in the RAM 202 to the application program execution management unit 214, and these data are delivered to the application program. Then, the application program which has acquired the data of the pitch angle θ_{X}, roll angle θ_{Y}, and yaw angle θ_{Z} stores the data in an application memory area in the RAM 202. Then, based on the pitch angle θ_{X}, roll angle θ_{Y}, and yaw angle θ_{Z}, game screen information to be outputted to the output unit 216 is updated and processing for changing key-assigned operations is performed based on the yaw angle θ_{Z}. For example, when a detected change amount in yaw angle θ_{Z} from the detected reference attitude exceeds a preset threshold value, key-assigned operation changing processing is performed.

In the present embodiment, as shown in Fig. 3, the liquid crystal display 27 is in a rectangular shape long in the Y-axis direction. Therefore, the game screen to be displayed on this liquid crystal display 27 is also in a rectangular shape long in the Y-axis direction. Therefore, when the longitudinal direction of the liquid crystal display 27 is in the vertical direction when it is observed from the user 1, the user 1 can play the game while looking at the game screen long in the vertical direction, and the field of view from the pilot's seat of the airplane can be made wide in the vertical direction. On the other hand, depending on the gaming situation, it is better that the field of view from the pilot's seat is wide in the horizontal direction, and in this case, it is better that the user plays the game while looking at a game screen long in the horizontal direction. In this case, the user 1 changes the attitude of the mobile phone 20 so that the longitudinal direction of the liquid crystal display 27 becomes the horizontal direction observed from the user 1. More specifically, while the normal line direction of the operation surface is substantially fixed, the mobile phone 20 is rotated clockwise or counterclockwise by 90 degrees around the normal line. Thereby, as described later, the user 1 can play the game while looking at the game screen long in the horizontal direction. However, when the attitude of the mobile phone 20 is thus changed, the arrangement direction of the respective keys 21, 22, 23, 24, and 25 on the operation surface observed from the user also change by 90 degrees. Therefore, the layout of the keys 21, 22, 23, 24, and 25, which were operated by the user 1 before the attitude change, changes after the attitude change, and the operability for the user 1 is deteriorated. Therefore, in the present embodiment, the key-assigned operation changing processing described later is performed so that, even after the attitude change, the user can play the game with the same operability as that before the attitude change. Hereinafter, the case where the attitude of the mobile phone 20 is changed by rotating it by 90 degrees counterclockwise around the normal line will be specifically described by way of example.

First, in the present embodiment, when the user 1 performs a predetermined operation to start the game (S4), at this timing, the application program execution management unit 214 functions as the control means 221 of the present invention, and stores the data of the yaw angle θ_{Z} acquired by the application program at the beginning in a reference data memory area (reference data memory means) in the application memory area in the RAM 202 (S5, S6). The data of the yaw angle θ_{Z} indicates an angle around the Z-axis coincident with the normal line direction of the operation surface as shown in Fig. 3, so that it is data indicating the orientation of the Y-axis (the same applies to the case of the X-axis) as a predetermined direction predetermined on the operation surface. Normally, the orientation of the Y-axis direction when the user 1 starts the game is substantially made coincident with the orientation of the Y-axis direction of the mobile phone 20 held by the user 1 playing the game in a state that the normal line direction is substantially fixed. Therefore, from the reference data θ_{Z0} detected at the timing of the game start, the orientation of the Y-axis direction in the game in which the user 1 operates the keys 21, 22, 23, 24, and 25 on the operation surface in a state that the normal line direction of the operation surface is substantially fixed can be identified.

When the reference data θ_{Z0} is stored and the game is started as described above, the game progresses while the user 1 changes the attitude of the mobile phone 20 for controlling the airplane in the game and operates the various keys 21, 22, 23, 24, and 25. In the present embodiment, the user 1 plays the game while looking at the vertically long game screen immediately after the game starts. When the user 1 plays the game while looking at the vertically long game screen, the "3" key of the numeric keypad 21 is assigned to an operation for accelerating the airplane in the game (hereinafter, referred to as "accelerating operation"), and the "#" key is assigned to an operation for decelerating the airplane in the game (hereinafter, referred to as "decelerating operation"). To some of the other keys, various operations may be assigned, however, description thereof is omitted herein. When the user 1 changes the attitude of the mobile phone 20 to control the airplane in the game or to make the direction of the game screen long in the horizontal direction, this attitude change is detected by the geomagnetic sensor 208 of the sensor detection unit 217, and data of the angles θₓ, θ_{y}, and θ_{z} are delivered to the application program (S7). Thereby, the application program execution management unit 214 updates the game screen information on the game screen imitating the field of view from the pilot's seat of the airplane according to the controlling results of the airplane in the game based on the data of the pitch angle θ_{X} and the roll angle θ_{Y} (S8). The application program execution management unit 214 executes the game screen direction switching process and key-assigned operation changing process based on the data of the yaw angle θ_{z} according to the contents of the application program (S9). Then, the application program execution management unit 214 executes processing for drawing the updated game screen on the display surface of the liquid crystal display 27 (S10).

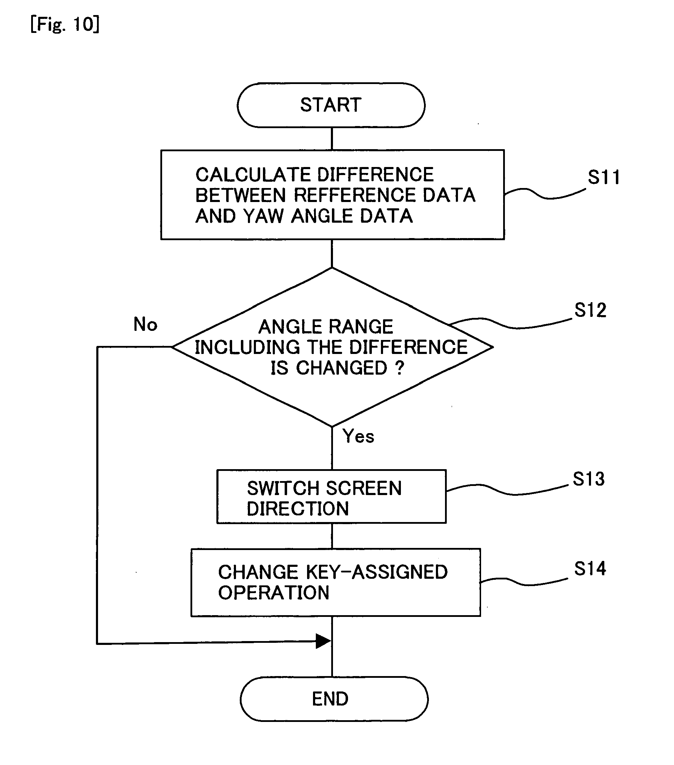

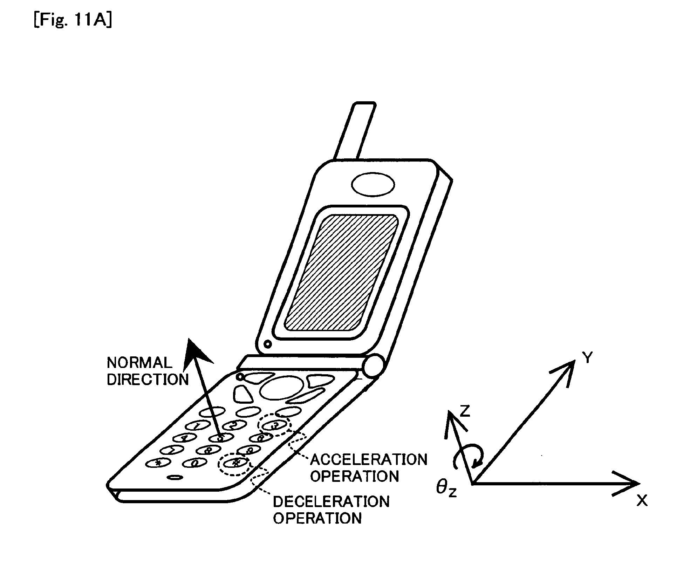

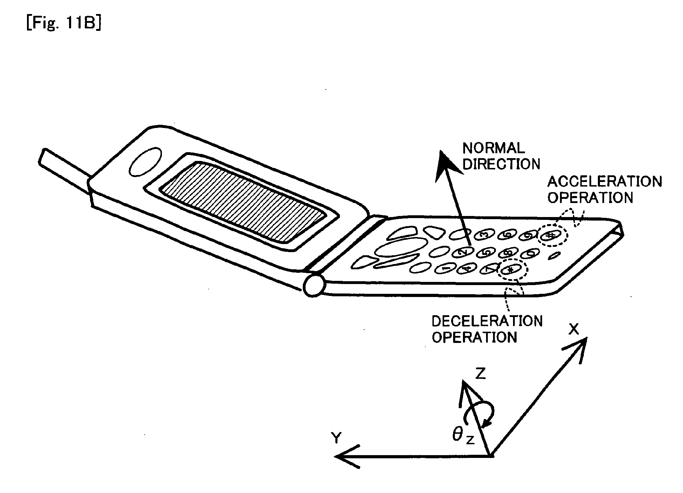

Fig. 10 is a flowchart showing a flow of the game screen direction switching processing and the key-assigned operation changing processing.
The application program execution management unit 214 calculates the difference between the yaw angle data θ_{Z} acquired at Step S7 described above and the reference data θ_{Z0} stored in the reference data memory area (S11). In the game, even if the user 1 changes the attitude of the mobile phone 20 so as to change the pitch angle θ_{X} and the roll angle θ_{Y} for controlling the airplane, the Y-axis (predetermined direction) hardly rotates around the Z-axis. Therefore, the yaw angle data θ_{Z} acquired at S7 corresponds to the projection direction of the Y-axis onto the virtual plane on which the operation surface has been positioned at the time of game start. For example, when the user 1 moves the mobile phone 20 from the attitude at the game start shown in Fig. 11A to the attitude shown in Fig. 11B, the yaw angle data θ_{z} at this time becomes smaller than the reference data θ_{Z0}. In this case, by calculating the difference (change amount in yaw angle data θ_{Z}), the rotation angle toward the minus direction of the Y-axis of the mobile phone 20 around the Z-axis can be recognized.

Herein, in the table memory area (key-assigned operation data memory means) of the application program memory area of the RAM 202, three key-assigned operation tables as key-assigned operation determining data for determining operations assigned to various keys according to the difference (change amount in yaw angle data θ_{Z}) are stored. Each key-assigned operation table associates a threshold value of the difference from the reference data θ_{Z0} (change amount in yaw angle data _{θZ}) and operations to be assigned to the various keys when the difference exceeds the threshold value with each other. When the application program execution management unit 214 accepts a key operation signal from the operation unit 213 via the main control unit 215, the application program execution management unit 214 executes an operation assigned to a key relating to the accepted key operation signal by referring to one key-assigned operation table in which a flag described later is set.

The application program execution management unit 214 calculates the difference and then determines whether the angle range to which the difference belongs has been changed (S12). The angle range to which this difference can belong is from -180 degrees to +180 degrees. In the present embodiment, this angle range is divided into a first range not less than -45 degrees and not more than +45 degrees, a second range less than -45 degrees, and a third range more than +45 degrees, and it is determined which range the calculated difference belongs to. In this example, the angle of -45 degrees and the angle of +45 degrees are threshold values.

Immediately after the game starts, the mobile phone 20 is in the attitude shown in Fig. 11 A, and while the user 1 plays the game in this attitude, the difference to be calculated substantially maintains zero. Therefore, in this case, the calculated difference is continuously within the first range (predetermined range), so that this processing is ended.

On the other hand, when the user 1 changes the attitude of the mobile phone 20 from the attitude shown in Fig. 11A to the attitude shown in Fig. 11B, the calculated difference becomes approximately -90 degrees. Therefore, the angle range which the calculated difference belongs to changes to the second range out of the first range (predetermined range). In this case, the application program execution management unit 214 performs processing for switching the screen direction (S13). More specifically, the application program execution management unit 214 reads out image direction data of the second range among the image direction data corresponding to the first range, the second range, and the third range, respectively, stored in the RAM 202. Then, according to this image direction data, the game screen information updated at S8 described above is changed so that the game screen rotates clockwise by 90 degrees. Thereby, even when the user 1 moves the mobile phone 20 from the attitude shown in Fig. 11 A to the attitude shown in Fig. 11 B as described above, the user 1 can observe a game screen long horizontally with the same screen direction as that of the game screen long vertically of the mobile phone in the attitude of Fig. 11A.

When the user 1 changes the attitude of the mobile phone 20 from the attitude shown in Fig. 11A to the attitude shown in Fig. 11B, the "3" key relating to the accelerating operation positioned on the upper right of the numeric keypad 21 observed from the user 1 side is positioned on the upper left, and the "#" key relating to the decelerating operation positioned on the lower right of the numeric keypad 21 is positioned on the upper right. If the key layout observed from the user 1 thus changes before and after the attitude change, the operability for the user 1 is deteriorated.
Therefore, in the present embodiment, when the angle range that the calculated difference belongs to changes to the second range out of the first range (predetermined range) as described above, the application program execution management unit 214 functions as the assignment changing means 223 and performs processing for changing the key-assigned operations (S14). More specifically, the application program execution management unit 214 selects a key-assigned operation table corresponding to the calculated difference, that is, a key-assigned operation table corresponding to the second range from the application program memory area, and sets a flag therein. After this flag setting, the application program execution management unit 214 executes an operation assigned to a key relating to an accepted key operation signal by referring to the key-assigned operation table in which the flag has been set. In the present embodiment, by this key-assigned operation change, the assignment of the accelerating operation that has been assigned to the "3" key of the numeric keypad 21 is changed to the "#" key. The assignment of the decelerating operation which has been assigned to the "#" key of the numeric keypad 21 is changed to the "*" key.

By this key-assigned operation change, even when the user 1 changes the attitude of the mobile phone 20 from the attitude shown in Fig. 11A to the attitude shown in Fig. 11B to play the game while looking at the game screen long horizontally, the key layout observed from the user 1 is the same. That is, even when the attitude is changed to the attitude shown in Fig. 11B, the "#" key assigned to the accelerating operation is positioned on the upper right of the numeric key-pad 21 similarly to the "3" key in the attitude of Fig. 11A before the attitude change. The "*" key assigned to the decelerating operation is also positioned at the lower right of the numeric keypad 21 similarly to the "#" key before the attitude change. Therefore, even after the attitude change, the user 1 can play the game with the same key layout as that before the attitude change.

In the present embodiment, the main control unit 215 receives an angle data acquiring request from the application program execution management unit 214 after the game start, and accordingly, after this, each time when the data of the angles θ_{X}, θ_{Y}, and θ_{Z} in the platform memory area are updated, the main control unit 215 sends the updated data to the application program execution management unit 214. Therefore, the user 1 can play the game of controlling the airplane in the game by tilting the main body of the mobile phone 20 while looking at the liquid crystal display 27 of the mobile phone 20. Thereby, the realistic sensation of the controlling can be increased. In addition, even when the attitude of the mobile phone 20 is changed to the attitude shown in Fig. 11B so that the game is played with the game screen long horizontally, the user 1 can play the game with the same key layout as that before the attitude change, and the operability is maintained.

A preferred embodiment of the present invention is described above, however, variations can be added to the disclosed embodiment within the technical scope described in the claims without deviating from the scope and the spirit of the present invention.
For example, in the present embodiment, keys arranged on the operation surface are described, however, the same also applies to the keys arranged out of the operation surface. Therefore, for example, key-assigned operations of back-side keys and side keys exposed to the outside in the state that the clam shell is closed may be changed.
In the present embodiment, when the user 1 changes the attitude of the mobile phone 20 from the attitude shown in Fig. 11A to the attitude shown in Fig. 11B, as described above, the assignment of the accelerating operation that has been assigned to the "3" key of the numeric keypad 21 is changed to the "#" key. In this case, focusing on the "3" key, the key-assigned operation thereof is changed from an accelerating operation valid state to an accelerating operation invalid state. Thus, the change from a valid state to an invalid state or from an invalid state to a valid state of a specific operation according to an attitude change is also included in the key-assigned operation change. Therefore, by applying the present invention, a key-assigned operation assigned to a back side key may be made valid only when the mobile phone 20 is in a specific attitude. When this key-assigned operation is used substantially only when the mobile phone is in the specific attitude, even if the back side key is pressed by mistake when the attitude is not the specific attitude, the operation is not performed. Therefore, erroneous operations can be effectively prevented.

Furthermore, in the present embodiment, even before the attitude change shown in Fig. 11A and even after the attitude change shown in Fig. 11B, the numeric keypad 21 is used for accelerating and decelerating the airplane of the game. However, for example, in an application program in which the numeric keypad 21 is not used after the attitude change although the numeric keypad 21 is used before the attitude change, after the attitude change, the key-assigned operations of the numeric keypad 21 may be made invalid.
Normally, the mobile phone 20 is handled in the attitude shown in Fig. 11A before the application program is started. At this time, when the multifunction key 25 is pressed, a menu screen is generally displayed. Then, in order to start the application program, various operations must be performed on this menu screen. By applying the present invention to omit these operations, it also becomes possible that before the application program is started, the attitude of the mobile phone 20 is changed from the attitude shown in Fig. 11A to the attitude shown in Fig. 11B, and the application program is started only by pressing the multifunction key 25. In this case, according to the attitude change of the mobile phone 20, the key-assigned operation of the multifunction key 25 is changed from the menu screen display operation to the application program starting operation. In particular, when the application program is used always in the attitude shown in Fig. 11B, after the application program is started, the operation for changing the attitude of the mobile phone 20 becomes unnecessary, and the operations are further simplified.

In addition, in the present embodiment, the attitude of the display surface of the liquid crystal display 27 is recognized by using the pitch angle θ_{X}, the roll angle θ_{Y}, and the yaw angle θ_{Z} detected by the geomagnetic sensor 208 of the sensor detection unit 217, however, it is also possible that the attitude of the display surface of the liquid crystal display 27 is recognized by using three accelerations (α_{X}, α_{y}, and α_{X} detected by the acceleration sensor 207. That is, by detecting the gravity acceleration by the acceleration sensor 207, the accelerations α_{X}, α_{Y}, and α_{Z} become the gravity acceleration components of the X-axis, the Y-axis, and the Z-axis, respectively. From these gravity acceleration components, the attitude of the mobile phone 20, that is, the attitude of the operation surface with respect to the gravity direction can be recognized.

In the present embodiment, the case where angle data sent from the sensor detection unit 217 are used in an application program which does not depend on a platform that works in an application execution environment built on the phone platform is described, however, the same applies to the case where an application program depending on the platform, that is, an application program which directly works on the phone platform.

The present invention is also effectively applicable to a game in which a virtual ball of the game is dropped in a hole on the game screen displayed on the liquid crystal display 27 as well as games like the above-described flight simulator. In this case, the application program has contents that by tilting the mobile phone 20, the virtual ball moves toward the tilting direction.

Without limiting to such games, the present invention is also effectively applicable to an application program for composing a mail. That is, when a user composes mail and changes the screen to be long horizontally or vertically according to his/her preference, in the same manner as described in the embodiment above, the screen direction is switched and the key layout observed from the user is maintained. Thereby, in both cases where the screen is long horizontally and vertically, the user can input characters with the same operability.

Furthermore, in the present embodiment, the timing for performing the attitude detection relating to the reference data is the timing of a predetermined operation for starting the game, however, the timing is not limited to this as long as the attitude of the operation surface when keys on the operation surface are operated by the user in a state that the normal line direction of the operation surface is substantially fixed can be identified at the timing. This timing differs depending on the type of the electronic apparatus to which the present invention is applied and operation modes thereof, etc. For example, when the present invention is applied in the above-described mail composing operation mode, the timing is set to the timing of transition to this operation mode, more specifically, the timing of a predetermined operation for displaying a mail composing screen. For example, it is determined whether the attitude of the electronic apparatus is the same during a plurality of times of key operations, and when it is determined that it is in the same attitude, these attitude detection results may be stored as reference data.

The present invention is widely applicable to all electronic apparatuses as well as the above-described mobile phone 20, and in this case, the same effect is obtained.

## Claims

1. An electronic apparatus comprising:
operating means having a plurality of keys capable of being operated independently from each other;
control means for performing predetermined operations different from each other assigned to the respective keys when the keys are operated;
attitude detecting means for detecting the attitude of the operating means; and
assignment changing means for performing assignment changing processing for changing assignment of the predetermined operations to be executed by the control means to at least a part of the plurality of keys based on the detection results performed by the attitude detecting means.

2. An electronic apparatus according to claim 1, wherein
the attitude detecting means detects a change amount in attitude of the operating means with respect to a reference attitude, and
the assignment changing means performs the assignment changing processing when the change amount in attitude detected by the attitude detecting means exceeds a preset threshold value.

3. An electronic apparatus according to claim 1, comprising:
reference data memory means for storing reference data, wherein
the operating means is formed by arranging the plurality of keys on a plane,
the attitude detecting means detects an orientation of a predetermined direction predetermined on the plane,
the control means stores data of the orientation of the predetermined direction obtained from the attitude detection results performed at a predetermined timing by the attitude detecting means as the reference data in the reference data memory means, and calculates an angle between the projection orientation of the orientation of the predetermined direction obtained from the attitude detection results performed by the attitude detecting means after the storing for a virtual plane at which the plane has been positioned at the predetermined timing and the orientation of the predetermined direction identified from the reference data, and
the assignment changing means performs the assignment changing processing when the angle calculated by the control means is out of a predetermined angle range.

4. An electronic apparatus according to claim 1, 2, or 3, wherein
the assignment changing processing is processing for assigning the predetermined operations that have been assigned to the respective keys as operation assignment changing targets before the change to other keys.

## Amended claims

### Amended claims under Art. 19.1 PCT

**1.** (Amended) An electronic apparatus comprising:
operating means having a plurality of keys capable of being operated independently from each other;
control means for performing predetermined operations different from each other assigned to the respective keys when the keys are operated;
attitude detecting means for detecting the attitude of the operating means; and
assignment changing means for performing assignment changing processing for changing assignment of the predetermined operations to be executed by the control means to at least a part of the plurality of keys based on the detection results of the attitude detecting means; wherein
the attitude detecting means detects a change amount in attitude of the operating means with respect to a reference attitude, and
the assignment changing means performs the assignment changing processing when the change amount in attitude detected by the attitude detecting means exceeds a preset threshold value.

**2.** (Amended) An electronic apparatus according to claim 1, wherein
the attitude detecting means includes an acceleration sensor and recognizes the attitude by the acceleration detected with the acceleration sensor.

**3.** An electronic apparatus according to claim 1, comprising:
reference data memory means for storing reference data, wherein
the operating means is formed by arranging the plurality of keys on a plane,
the attitude detecting means detects an orientation of a predetermined direction predetermined on the plane,
the control means stores data of the orientation of the predetermined direction obtained from the attitude detection results performed at a predetermined timing by the attitude detecting means as the reference data in the reference data memory means, and calculates an angle between the projection orientation of the orientation of the predetermined direction obtained from the attitude detection results performed by the attitude detecting means after the storing for a virtual plane at which the plane has been positioned at the predetermined timing and the orientation of the predetermined direction identified from the reference data, and
the assignment changing means performs the assignment changing processing when the angle calculated by the control means is out of a predetermined angle range.

**4.** An electronic apparatus according to claim 1, 2, or 3, wherein
the assignment changing processing is processing for assigning the predetermined operations that have been assigned to the respective keys as operation assignment changing targets before the change to other keys.

**5.** (Added) An electronic apparatus according to claim 1, 2, or 3, wherein
the assignment changing processing is processing for changing of the predetermined operation assigned to at least a part of the keys from a valid state to an invalid state or processing for changing the predetermined operation from an invalid state to a valid state.
